# EUROPEAN PATENT SPECIFICATION

(11) **EP 0 666 132 B1**
(45) Date of publication and mention of the grant of the patent: **06.11.2002**
(21) Application number: 94300910.0
(22) Date of filing: 08.02.1994
(51) Int. Cl.: B23Q 1/48, B23Q 1/54

(54) **Means for positioning an element, whereby a rotatable element is mounted excentrically on a rotable base plate**
Mittel zur Positionierung eines Elements, wobei eine drehbare Platte exzentrisch auf einer drehbaren Grundplatte montiert ist
Dispositif de positionnement d'un élément, dans lequel un plateau tournant est monté excentriquement sur un plateau de base tournant

(43) Date of publication of application: 09.08.1995
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(56) References cited:
- EP-A- 0 361 818
- EP-A- 0 402 967
- CH-A- 333 612
- CH-A- 504 919
- FR-A- 2 385 480
- US-A- 2 610 550
- US-A- 4 014 439
- SOVIET INVENTIONS ILLUSTRATED Section PQ, Week 8413, 9 May 1984 Derwent Publications Ltd., London, GB; Class P54, AN 84-080867 & SU-A-1 022 802 (KAUN POLY) 15 June 1983

## Description

This invention relates to a drive mechanism comprising a first driven rotatable disc and a second driven disc rotatably mounted on the first disc, as the preamble of independent claim 1. Such a mechanism is known from US A 014 439 A.

According to this invention, the means for mounting the second disc on the first disc includes a linear displacement mechanism for permitting linear displacement of the central axis of the second disc relative to the central axis of the first disc, whereby a target point on the second disc may be positioned anywhere in a two dimensional co-ordinate system by selectively rotating the first and second discs.

Using the invention, it is possible to construct a drive mechanism which allows an uppermost layer target point to be driven for random absolute positioning displacement on a work surface or for gyration along any of a number of axial centres.

The driving means may include a conventional work table bearing seat, guide rail bearing and transmission structure, arrangement angle displacement detection device, fastening device and manual or mechanical driving structure.

An embodiment of the invention will now be described, by way of example, with reference to the accompanying drawings, of which:
Figure 1 is a diagrammatic view showing the basic structure of a known co-ordinates displacement drive formed by multi-arbor overlaying double-angle displacement;
Figure 2 is a side view of Figure 1;
Figure 3 is a diagrammatic view showing the basic structure of a co-ordinates displacement drive formed by multi-arbor overlaying double-angle displacement which can be engaged in linear displacement driving adjustment between two axial centres according to the current invention; and
Figure 4 is a side view of Figure 3.

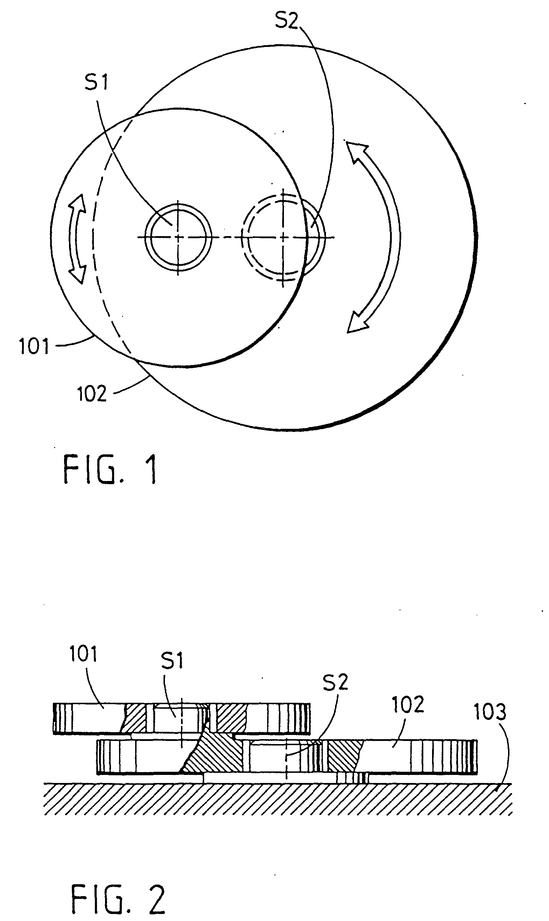

Referring to FIG. 1, the diagrammatic view shows the basic structure of a known coordinates displacement drive formed by multi-arbor overlaying double-angle displacement, and FIG. 2 is a side view of FIG. 1, comprising:
a first gyration seat 101: for loading workpiece or itself as the bearing seat of the mechanism or machine body structure, which can rotate along S1 axial center, and the base is an independent structure secured to the second gyration seat or directly formed by the second gyration seat;
a second gyration seat 102: except for loading the first gyration seat, it may rotate along S2 axial center for driving the base 103, and S2 and S1 are different axis and axial distance is smaller than the radius of the first gyration seat.

The foregoing structure can be driven respectively or jointly by the first gyration seat and the second gyration seat to make the target point on the first gyration seat as the coordinates position adjustment driving on the work surface; the foregoing structure includes the conventional work table bearing seat, guide rail bearing and transmission structure, arrangement angle displacement detection device, fastening device, manual or mechanical power driving structure.

The structure of a coordinates displacement drive formed by multi-arbor overlaying double-angle displacement as shown in FIG. 1, may, in accordance with the current invention, be designed into linear displacement driving adjustment structure and function between two axial centers, and the linear displacement driving may be engaged in synthetical vector displacement adjustment together with one or all of the foregoing two gyration drivings so as to change the absolute position on the uppermost layer first gyration seat, and its function includes:
(1) to change double-polar coordinates position decomposition by adjusting axial distance between S1 and S2.
(2) to turn S2 as driving direction for adjustable linear displacement mechanism.
(3) linear displacement mechanism and S1 or S2 rotational axis for synthetical driving displacement.

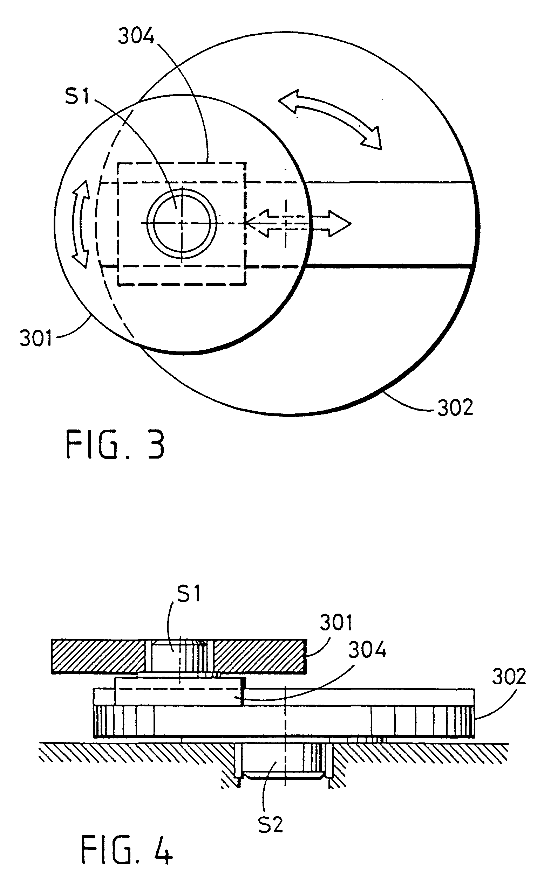

FIG. 3 is a diagrammatic view showing the basic structure of the present invention, i.e. the structure of a coordinates displacement drive formed by multi-arbor overlaying double-angle displacement which can be engaged in linear displacement driving adjustment between two axial centers and FIG. 4 is a side view of FIG. 3, comprising:
the disc (or gyration seat) 301 for supporting a workpiece or being itself the bearing seat of a mechanism or machine body structure, which can rotate about a central axis S1 and a linear displacement mechanism 304 mounted under the base and between the disc and a further disc (or gyration seat) 302 for counterly passing by the axe S1 and S2; the linear displacement mechanism including coupling guide rails, guide slot or dove-tail slot and dove-tail seat or guide lever and slide block, and having guide worm or ball-roller worm or other linear displacement driving device for accepting manual or mechanical or electric power or magnetic or fluid driving in order to adjust the distance between axes S1 and S2 for independent driving, synthetical driving together with the first disc, synthetical driving together with the second disc or synthetical driving in combination with both discs so as to move the target point on the disc 301 for absolute position driving and positioning displacement.

The foregoing rotations and linear displacement may made by manual control positioning or controlled by a digital control system or an analogue control system for positioning or for independent driving or system integration for positioning drive, fastening and display and for cutting press delivery.

## Claims

1. A drive mechanism formed by multi-arbor overlaying double-angle displacement of two overlaying structures, the drive mechanism comprising:
a first driven disc (302) rotatable about a first central axis (S2); and
a second driven disc (301) for supporting a workpiece or for being a bearing seat of a mechanism or machine body structure, and means for mounting the second disc (301) on the first disc (302) such that the second disc (301) is rotatable about a second central axis (S1) which is displaced from the central axis (S2) of the first disc (302) to form an eccentric drive mechanism, **characterised in that** the mounting means includes a linear displacement mechanism (304) for permitting linear displacement of the second central axis (S1) relative to the first central axis (S2), whereby a target point on the second disc (301) may be positioned anywhere in a two dimensional coordinate system by selectively rotating the first and second discs.

2. Apparatus as claimed in claim 1, wherein the rotations and the linear displacement are controlled by a digital control system for positioning the first and second discs and for fixing them in said positions.

3. Apparatus as claimed in claim 1, wherein the rotations and the linear displacement are controlled by an analogue control system for positioning the first and second discs and for fixing them in said position.

## Patentansprüche

1. Antriebsvorrichtung, welche durch Mehrfachachsenüberlagerungs-Zweiwinkelverschiebung zweier überlagerter Strukturen gebildet wird, wobei die Antriebsvorrichtung umfaßt:
eine erste angetriebene Scheibe (302), welche um eine erste Mittelachse (S2) drehbar ist; und
eine zweite angetriebene Scheibe (301) zum Tragen eines Werkstücks bzw. zum Dienen als Lagerauflage einer Vorrichtungs- bzw. Maschinenkörperstruktur und eine Einrichtung zum Anbringen der zweiten Scheibe (301) an der ersten Scheibe (302), so daß die zweite Scheibe (301) um eine zweite Mittelachse (S1) drehbar ist, welche gegen die Mittelachse (S2) der ersten Scheibe (302) versetzt ist, um eine Exzenterantriebsvorrichtung zu bilden, **dadurch gekennzeichnet, daß** die Anbringeinrichtung eine Linearverschiebungsvorrichtung (304) zum Ermöglichen einer Linearverschiebung der zweiten Mittelachse (S1) gegen die erste Mittelachse (S2) umfaßt, wodurch ein Zielpunkt auf der zweiten Scheibe (301) in einem zweidimensionalen Koordinatensystem durch selektives Drehen der ersten und zweiten Scheibe beliebig angeordnet werden kann.

2. Vorrichtung nach Anspruch 1, wobei die Drehungen und die Linearverschiebung durch ein digitales Steuersystem zum Anordnen der ersten und zweiten Scheibe und zum Befestigen davon in den Positionen gesteuert werden.

3. Vorrichtung nach Anspruch 1, wobei die Drehungen und die Linearverschiebung durch ein analoges Steuersystem zum Anordnen der ersten und zweiten Scheibe und zum Befestigen davon in den Positionen gesteuert werden.

## Revendications

1. Mécanisme d'entraînement composé d'un arbre multiple à déplacement angulaire double de recouvrement de deux structures se chevauchant, le mécanisme d'entraînement comprenant :
. un premier disque mené (302) monté à rotation autour d'un premier centre axial (S2) ;
. un second disque mené (301) pour supporter une pièce à usiner ou pour constituer un support porteur pour un mécanisme ou une structure d'un bâti ou châssis de machine ; et
. un moyen pour monter le second disque (301) à rotation sur le premier disque (302) autour d'un second centre axial (S1) décalé par rapport au centre axial (S2) du premier disque (302) pour former un mécanisme d'entraînement excentré,
**caractérisé en ce que** le moyen de montage comporte un mécanisme de déplacement linéaire (304) pour permettre le déplacement linéaire du second centre axial (S1) par rapport au premier centre axial (S2), par lequel un point cible du second disque (301) peut être positionné en un endroit quelconque dans un système de coordonnées à deux dimensions par rotation sélective du premier et du second disque.

2. Appareil selon la revendication 1, **caractérisé en ce que** les rotations et le déplacement linéaire sont commandés par un système de commande numérique pour positionner le premier et le second disque et les maintenir dans ces positions.

3. Appareil selon la revendication 1, **caractérisé en ce que** les rotations et le déplacement linéaire sont commandés par un système de commande analogique pour positionner le premier et le second disque et les maintenir dans ces positions.
